# DEMANDE DE BREVET EUROPEEN

(11) **EP 1 614 568 A1**
(43) Date de publication de la demande: **11.01.2006**
(21) Numéro de dépôt: 05106155.4
(22) Date de dépôt: 06.07.2005
(51) Int. Cl.: B60J 7/00

(54) **Dispositif d'occultation pour véhicule automobile, et véhicule correspondant.**

(30) Priorité: 07.07.2004 FR 0407581
(71) Demandeur: WAGON SAS, 79302 Bressuire Cédex (FR)
(72) Inventeur: Seiller, Julien, 79300, Bressuire (FR)
(74) Mandataire: Bioret, Ludovic

(57) **Abrégé**

L'invention concerne un dispositif d'occultation pour une surface vitrée d'un véhicule automobile comprenant un rideau d'occultation, présentant deux extrémités.

Selon l'invention, lesdites extrémités sont solidarisées respectivement à un premier et un second tubes d'enroulement, placés de part et d'autre d'une surface à occulter.

En outre, selon l'invention, la longueur dudit rideau d'occultation entre lesdites deux extrémités est supérieure à la longueur de ladite surface à occulter.

## Description

Le domaine de l'invention est celui des véhicules automobiles, et notamment des véhicules présentant une surface vitrée importante, par exemple au niveau du pavillon. Plus précisément, l'invention concerne l'occultation de telles surfaces vitrées, notamment pour se protéger des rayons du soleil.

La tendance actuelle, en matière de véhicule automobile, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil.

Des surfaces vitrées multiples ont également été proposées, par exemple sous la forme de deux ou trois éléments, dont certains peuvent former toits ouvrants. De la même façon, des surfaces vitrées importantes peuvent être prévues sur d'autres parties du véhicule, et par exemple à l'arrière, notamment lorsque le véhicule est équipé d'un hayon.

Ces surfaces vitrées donnent une impression de volume et de confort aux occupants du véhicule et permettent que l'intérieur de l'habitacle soit plus lumineux.

Il est cependant nécessaire de prévoir des moyens d'occultation de ces surfaces vitrées, pour protéger l'habitacle et ses occupants du soleil. Lorsque le pavillon est équipé d'un toit ouvrant, on a pensé à l'équiper d'un volet rigide, pouvant coulisser dans le pavillon. Cette solution pourrait éventuellement être étendue au cas où plusieurs zones vitrées existent, sous réserve qu'il reste suffisamment d'espace dans le pavillon pour dissimuler les volets lorsque ceux-ci ne sont pas utilisés pour occulter la surface vitrée correspondante. Clairement, en revanche, une telle solution ne peut pas être envisagée lorsque le pavillon est intégralement, ou essentiellement, vitré.

Pour les surfaces vitrées réduites, et verticales ou sensiblement verticales, telles que les vitres arrières ou latérales du véhicule, on connaît également les stores à enrouleur, que l'on peut déployer pour se protéger du soleil.

Ces stores à enrouleurs comprennent classiquement une toile d'occultation solidaire d'un tube enrouleur et dont l'extrémité libre est équipée d'une barre de tirage.

Ces stores peuvent se replier par l'enroulement de la toile autour du tube enrouleur lorsque l'utilisateur ne souhaite pas occulter la lumière extérieure.

Un des inconvénients de ces techniques réside dans le fait qu'elles conduisent généralement à une occultation relativement forte des différentes surfaces vitrées, qu'il s'agisse des stores destinés à occulter des vitres latérales ou arrières, ou des pavillons.

Un autre inconvénient de ces techniques connues de l'art antérieur est qu'elles ne permettent pas, avec un même store, de moduler le degré d'occultation en fonction de la luminosité souhaitée dans l'habitacle. L'utilisateur n'a ainsi que le choix du « tout ou rien ». Il peut notamment être souhaitable, lorsqu'il y a du soleil , de se protéger de la chaleur et de l'éblouissement dûs aux rayons du soleil, sans pour autant réduire de façon trop importante la luminosité dans le véhicule.

Encore un autre inconvénient de ces techniques connues est qu'elles n'offrent pas à l'utilisateur un choix alternatif quant aux motifs ou à la couleur du revêtement intérieur, afin de créer une ambiance et/ou une luminosité particulière dans l'habitacle.

L'invention a notamment pour objectif de pallier ces différents inconvénients de l'état de l'art.

Plus précisément, l'invention a pour objectif de fournir un dispositif d'occultation pour véhicule automobile, et notamment pour le pavillon de ce dernier, dont le degré d'occultation lorsque celui-ci est déployée puisse être modulable, et par exemple plus faible que celui généralement obtenu à partir des dispositifs connus.

Un autre objectif de l'invention est de fournir dans certains modes de réalisation un dispositif d'occultation dont le degré d'occultation puisse être modulé en fonction de la luminosité, et éventuellement de la chaleur, souhaitée dans l'habitacle.

Un autre objectif de l'invention est en outre de proposer un dispositif offrant à l'utilisateur dans certains modes de réalisation, une alternative de choix relatifs à la couleur du store et/ou aux motifs du revêtement intérieur de façon à obtenir une ambiance particulière dans l'habitacle.

Encore un autre objectif de l'invention est de proposer un tel dispositif d'occultation, notamment pour un pavillon, qui soit peu encombrant .

Un autre objectif de l'invention est de proposer un dispositif d'occultation pour un pavillon dont le procédé de fabrication soit simple et peu coûteux à mettre en oeuvre.

L'invention a également pour objectif de fournir un tel dispositif d'occultation qui soit modulable et efficace, et qui présente un aspect visuel de bonne qualité, lorsqu'il est déployé.

Un autre objectif particulier de l'invention est de proposer un tel dispositif qui permette un déploiement sur une grande surface sensiblement horizontale telle qu'un pavillon.

Ces objectifs, ainsi que d'autres qui apparaîtront par la suite, sont atteints à l'aide d'un dispositif d'occultation pour une surface vitrée d'un véhicule automobile, comprenant un rideau d'occultation, présentant deux extrémités.

Selon l'invention, lesdites extrémités sont solidarisées respectivement à un premier et un second tubes d'enroulement, placés de part et d'autre d'une surface à occulter.

En outre, selon l'invention, la longueur dudit rideau d'occultation entre lesdites deux extrémités est supérieure à la longueur de ladite surface à occulter.

Ainsi, l'invention repose sur une approche tout à fait nouvelle et inventive consistant à réaliser un dispositif comprenant un rideau d'occultation dont la longueur est supérieure à la longueur de la surface à occulter et dont une portion est en permanence déployée entre deux tubes d'enroulement.

Une portion excédentaire reste ainsi enroulée autour d'un tube d'enroulement ou répartie autour des deux tubes d'enroulement.

Le fait que la longueur du rideau soit supérieure à celle de la surface vitrée permet à l'utilisateur de choisir quelle portion du rideau il souhaite déployer devant celle-ci. Cette possibilité pourra par exemple être utilisée pour faire varier l'opacité (par exemple en fonction de l'intensité lumineuse et des souhaits des passagers), le décor (par exemple en fonction du coloris et/ou du motif souhaité, dans le cas où le rideau présente différents coloris et/ou différents motifs sur sa longueur), ou encore de changer une portion d'occultation en cas d'usure ou de tâche.

L'invention permet ainsi d'obtenir une solution particulièrement adaptée à la réalisation d'un dispositif pour l'occultation de surfaces d'un véhicule automobile. Il peut notamment s'agir d'un pavillon intégralement ou en grande partie vitré, de la vitre arrière ou des vitres latérales du véhicule.

Selon un mode de réalisation avantageux de l'invention, le rideau d'occultation présente sur sa longueur des zones d'opacité et/ou de coloris et/ou de motifs et/ou de texture prédéterminés différentes.

Ces différentes zones pourront de façon avantageuse s'étendre parallèlement aux tubes d'enroulement.

La présence de ces différentes zones permet ainsi à l'utilisateur de modifier la luminosité dans l'habitacle. En effet, en présence de zones de différents degrés d'opacité, il pourra choisir s'il souhaite occulter totalement la lumière extérieure ou au contraire la laisser passer à travers la vitre.

En outre, la présence de coloris différents, lui permettra d'obtenir différentes ambiances dans l'habitacle. La présence de motifs et/ou de textures différents lui permettront par exemple d'accorder ceux-ci avec l'habillage intérieur du véhicule.

De façon avantageuse, la longueur d'au moins une des zones est sensiblement égale à la longueur de ladite surface à occulter. Ainsi, l'utilisateur pourra occulter la totalité de la surface vitrée avec une zone particulière du rideau d'occultation.

Préférentiellement, au moins une des zones est transparente. L'utilisateur pourra ainsi obtenir un état dans lequel la lumière extérieure n'est pas du tout occultée, cet état étant classiquement obtenu lorsque le rideau est replié dans les dispositifs d'occultation connus dans l'art antérieur.

Il est cependant également possible d'envisager qu'une des zones du rideau présente un évidement encadré de chaque côté par une bordure latérale d'entraînement, de façon que l'état dans lequel la surface vitrée n'est pas occultée puisse être obtenu.

De façon avantageuse, le rideau d'occultation comprend au moins une zone intermédiaire présentant un degré d'opacité variable et progressif. Cette zone de degré d'opacité progressif permet de faire la transition entre par exemple une zone n'occultant pas du tout la lumière telle que mentionnée précédemment et une zone opaque.

En outre la présence de différentes zones successives pourra par exemple permettre à l'utilisateur de choisir s'il souhaite que seul l'avant ou au contraire l'arrière du véhicule soit protégé de la lumière.

Différentes successions de zones pourront bien sûr être envisagées, telles que « opaque/transparent/opaque » ou encore « transparent/opaque/transparent ».

Selon un mode de réalisation de l'invention, il sera possible de prévoir qu'au moins un des tubes d'enroulement soit mobile en coulissement perpendiculairement à son axe d'enroulement.

Les rouleaux étant ainsi mobiles par rapport à la surface vitrée à occulter, ils pourront être placés très proches l'un de l'autre, par exemple au niveau d'une des extrémités de la surface vitrée, de façon que le rideau soit presque entièrement enroulé autour de l'un ou l'autre, ou des deux, tubes d'enroulement et qu'il n'occulte pas la surface vitrée.

Toutes les positions pourront bien sûr être envisagées quant à la disposition des tubes d'enroulement.

Selon ce mode de réalisation, des rails de guidage pourront être prévus sur les bords latéraux de la surface à occulter de façon à permettre le déplacement d'un ou des deux tubes d'enroulement.

De façon préférée, le dispositif est destiné à l'occultation d'un pavillon vitré ou d'une partie d'un pavillon vitré.

Selon un autre mode de réalisation de l'invention, le rideau d'occultation s'étend dans un espace intérieur défini par deux panneaux vitrés superposés et formant un module de toit.

Ce mode de réalisation permet ainsi l'obtention d'un système efficace dans lequel le rideau d'occultation est protégé et maintenu de sorte qu'il suive parfaitement la courbure de la surface à occulter. Cela se révèle particulièrement utile et efficace pour l'occultation d'une surface galbée.

De façon avantageuse, les tubes d'enroulement sont montés sur ou dans le module de toit.

La réalisation des tubes d'enroulement simultanément à la fabrication du module de toit, par moulage par exemple, permet de simplifier le procédé de fabrication de l'ensemble du dispositif et de réduire ainsi les coûts associés.

De façon préférée, la surface vitrée à occultée pourra être réalisée en verre ou en matière plastique (telle que le polycarbonate par exemple), qu'il s'agisse d'une vitre simple ou d'un module de toit formé de deux panneaux vitrés.

Avantageusement, la longueur du rideau d'occultation est d'au moins deux fois la longueur de la surface à occulter. Le rideau d'occultation pourra ainsi présenter par exemple au moins deux zones de la longueur de la surface à occulter d'opacité, de coloris, de motifs et/ou de texture différents.

Des zones de toutes dimensions et de toutes formes pourront bien sûr être envisagées, et la longueur du rideau d'occultation pourra être choisie de façon à proposer suffisamment de zones différentes à l'utilisateur.

De façon préférée, au moins un des tubes d'enroulement est associé à des moyens de motorisation assurant sa rotation.

La rotation du tube permet le déroulement ou l'enroulement du rideau d'occultation autour de ce tube et actionne ainsi sa progression devant la surface à occulter.

Les deux tubes (ou au moins un d'entre eux) pourront bien sûr être équipés de moyens de motorisation actionnables par l'utilisateur, et ils pourront en outre comprendre des moyens de rappels de façon à assurer la tension de la surface déployée du rideau d'occultation.

Selon un mode de réalisation particulier, un des tubes d'enroulement est motorisé et l'autre tube est équipé de moyens de rappel. Les moyens de motorisation permettent alors l'enroulement du rideau autour du tube motorisé et son blocage dans une position déterminée. Les moyens de rappel assurent la tension de la partie déployée du rideau d'occultation, que celui-ci soit en mouvement ou à l'arrêt, et le cas échéant, sa progression dans l'autre sens.

Préférentiellement, le rideau d'occultation pourra être réalisé en toile et/ou en matière plastique.

L'invention telle que présentée concerne également tout module de toit comprenant deux panneaux superposé et solidarisés l'un à l'autre, définissant un espace intérieur au moins partiellement fermé, dans lequel s'étend au moins au moins un dispositif d'occultation de ce type ainsi que tout véhicule automobile équipé d'un dispositif d'occultation de ce type.

D'autres caractéristiques et avantages de l'invention apparaîtront plus clairement à la lecture de la description suivante de plusieurs modes de réalisation préférentiels, donnés à titre de simples exemples illustratifs et non limitatifs, et des dessins annexés, parmi lesquels :
- la figure 1 présente de façon schématique, un dispositif d'occultation selon l'invention ;
- la figure 2 présente une vue en coupe longitudinale du même dispositif dans le cas de l'occultation d'une surface vitrée formée par un module de toit présentant deux panneaux parallèles.

Le principe général de l'invention repose donc sur la mise en oeuvre d'un dispositif d'occultation comprenant un rideau d'occultation solidaire d'un tube d'enroulement à chacune de ses extrémités, de sorte qu'une portion du rideau d'occultation soit en permanence déployée devant la surface à occulter.

Selon l'invention, le rideau d'occultation présente une longueur supérieure à la longueur de la surface à occulter. La « longueur excédentaire » du rideau d'occultation est ainsi enroulée autour d'un ou des deux tubes d'enroulement.

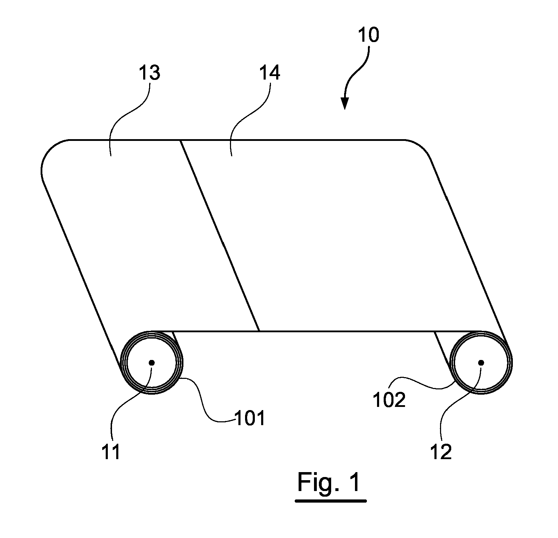

En référence à la figure 1, un dispositif selon l'invention comprend deux tubes d'enroulement 11 et 12, placés à chacune des extrémités d'une surface à occulter telle qu'un pavillon de véhicule, une vitre arrière ou encore latérale par exemple. Un rideau d'occultation 10 est solidaire de deux tubes d'enroulement (ou enrouleurs) 11 et 12, la solidarisation pouvant être faite par soudage ou par collage par exemple, et est en permanence déployé entre les deux tubes d'enroulement 11 et 12. La longueur du rideau 10 étant supérieure à la longueur de la surface à occulter, les parties 101 et 102 du rideau 10, correspondant à la longueur excédentaire de celui-ci, sont enroulées respectivement autour deux tubes d'enroulement 11 et 12.

La longueur excédentaire du rideau d'occultation peut, bien entendu, n'être enroulée qu'autour d'un seul des deux tubes d'enroulement, lorsque par exemple un des tubes d'enroulement aura été actionné jusqu'à ce que le rideau 10 soit « en bout de course ».

Le rideau d'occultation 10 présente sur sa surface des zones présentant un degré d'opacité différent et/ou des coloris différents. Le terme « coloris » peut désigner une couleur uniforme et/ou un motif particulier, de sorte que certaines zones du rideau d'occultation 10 puissent par exemple être assorties à la garniture intérieure du véhicule ou aux revêtements des sièges, ou tout simplement qu'elles conviennent aux goûts de l'utilisateur.

Différentes textures pourront également être envisagées pour la réalisation des différentes zones du rideau d'occultation 10.

Tel qu'illustré sur la figure 1, la surface du rideau d'occultation 10 déployée entre les deux tubes d'enroulement 11 et 12 présente deux zones 13 et 14 différentes. Ainsi, par exemple, la zone 13 pourra être une zone opaque (noire ou de toute autre couleur) et la zone 14 une zone transparente (celle-ci pouvant également être colorée).

La présence d'une zone transparente permet d'obtenir la même situation qu'avec un store non déployé, dans les systèmes classiques.

Il est également possible d'envisager que le rideau d'occultation présente un évidement central au niveau d'une zone particulière de sa surface, encadré par deux bordures latérales d'entraînement, de sorte à obtenir la situation d'un store non déployé mentionnée ci-avant.

La longueur des différentes zones de la surface du rideau d'occultation pourront par exemple être de la longueur de la surface à occulter, de sorte que l'utilisateur puisse choisir une seule des différentes zones sur toute la longueur de la surface à occulter, ou au contraire, qu'il puisse choisir une position du rideau d'occultation 10, telle que représentée par la figure 1, dans laquelle une partie de la surface déployée soit totalement occultante et que l'autre partie laisse passer la lumière.

Des parties de deux zones différentes étant alors au niveau de la surface déployée devant la vitre à occulter.

Le choix de coloris différents permettra ainsi à l'utilisateur d'obtenir à l'intérieur de l'habitacle une ambiance et une luminosité particulières.

Il sera également possible d'envisager la superposition de deux toiles, ou de tout autre couche de matériaux pour la réalisation du rideau d'occultation 10, de façon à augmenter les possibilités de modulation.

Des zones plus courtes peuvent bien sûr être envisagées. Avantageusement, les transitions entre les zones pourront être progressives.

La progression du rideau d'occultation entre les deux tubes d'enroulement 11 et 12 sous l'effet de la rotation des tubes 11 et 12, de façon que la surface déployée entre les tubes corresponde par exemple à la partie 101 précédemment enroulée autour du tube d'enroulement 11, permet de modifier l'occultation de la vitre en fonction de la ou des zones du rideau d'occultation au niveau la surface déployée.

Le rideau d'occultation 10 pourra par exemple présenter une longueur de deux ou trois fois celle de la surface à occulter. Le nombre de zones de degré d'opacité et/ou de coloris différents pourra être variable, la longueur des différentes zones pouvant être choisie librement.

Préférentiellement, les différentes zones pourront s'étendre parallèlement aux tubes d'enroulement 11 et 12.

Dans le cas où la longueur du rideau d'occultation est de trois fois la longueur de la surface à occulter, les différentes zones pourront par exemple se succéder en alternant zones opaques et zones transparentes.

Ainsi, si la longueur des zones correspond à la longueur de la surface à occulter et en conséquence à la longueur de la surface déployée du rideau d'occultation, trois zones différentes pourront s'enchaîner, formant les « motifs » opaque/transparent/opaque ou transparent/opaque/transparent.

Dans le cas de l'occultation d'un pavillon vitré par exemple, l'utilisateur pourra alors choisir s'il souhaite que celui-ci soit totalement occulté (la zone opaque étant alors la surface déployée) ou que la lumière puisse passer dans l'habitacle, ou encore que le pavillon ne soit occulté qu'en partie, tout en pouvant choisir qu'uniquement la partie avant ou la partie arrière de celui-ci ne soient occultées.

Une autre variante selon l'invention pourra consister dans un rideau d'occultation présentant une succession d'au moins trois zones différentes, chacune de la longueur de la surface à occulter, les zones situées aux extrémités du rideau d'occultation étant une zone opaque et une zone transparente, et la zone centrale étant alors une zone présentant un degré d'opacité intermédiaire, variant de façon progressive entre la transparence et l'opacité.

Les rideaux d'occultation pourront par exemple être réalisés en toile ou en matière plastique, sur lequel les motifs et/ou la matière opacifiante sont par exemple imprimés.

Différentes textures de matériaux pourront par ailleurs être utilisées pour la réalisation des différentes zones du rideau d'occultation, telles qu'un film ou un revêtement en tissu, tricoté ou non tissé, par exemple.

On peut également prévoir que les différentes zones soient réalisées indépendamment (par exemple par découpage dans un rouleau d'une matière unie) puis assemblées par tout moyen adéquat.

Des baleines de renfort pourront également être prévues de façon que le rideau d'occultation s'adapte à la courbure de la surface de la vitre à occulter, notamment lorsque la surface de celle-ci est importante et qu'en conséquence, le rideau risque de « pôcher ».

La rotation des tubes d'enroulement permettant la progression du rideau d'occultation pourra être motorisée ou manuelle. Il est possible en particulier de prévoir que la rotation d'un seul ou de chacun des rouleaux soit motorisée.

Les tubes d'enroulement pourront être équipés de moyens de rappels de façon que la surface déployée du rideau d'occultation soit tendue. Il sera notamment envisageable de prévoir que les tubes d'enroulement 11 et 12 soient équipés de moyens de rappel, mais que seul le tube d'enroulement 11 comprenne des moyens de motorisation assurant sa rotation.

Les moyens de motorisation seront bien sûr reliés à une commande à disposition de l'utilisateur du véhicule. L'utilisateur pourra ainsi choisir le sens dans lequel il souhaite voir progresser le rideau.

Des moyens d'indexation de la position du rideau 10 peuvent également être prévus de sorte que certaines positions particulières correspondant par exemple une occultation totale ou au contraire aucune occultation de la lumière en fonction de la zone du rideau déployée entre les deux enrouleurs soient mémorisées et facilement accessible par l'utilisateur.

On peut également envisager qu'au moins un des tubes d'enroulement soit mobile en coulissement, pour modifier la surface occultée. Dans ce cas, le terme « surface à occulter » des revendications s'entend bien sûr comme étant la surface maximale à occulter, correspondant au cas où les tubes sont les plus éloignés.

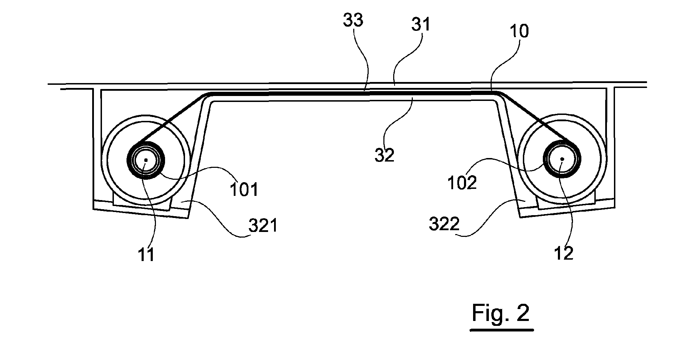

Selon un mode de réalisation avantageux de l'invention illustré par la figure 2, le dispositif d'occultation est monté dans un module de toit transparent formé de deux panneaux vitrés superposés. Cette technique est notamment présentée dans la demande de brevet FR 03 14326 (non encore publiée).

Les deux panneaux correspondent, tels que présentés sur la figure 2, à un panneaux extérieur 31 et à un panneau intérieur 32. Le panneau externe 31 peut comprendre une zone transparente correspondant essentiellement à la partie centrale et une zone périphérique opaque et/ou de couleur destinée à dissimuler diverses fonctions techniques. Le panneau interne 32 peut être totalement, ou sur sa plus grande partie, transparent.

Préférentiellement les deux panneaux sont réalisés en matière plastique telle que du polycarbonate, ce qui permet notamment de réduire le poids du pavillon.

Tel qu'illustré sur la figure 2, le panneau interne 32 présente à ses extrémités un logement 321 et 322 prévus pour recevoir respectivement les tubes d'enroulement 11 et 12, et le cas échéant les moyens de motorisation associés. Ces logements sont définis précisément par moulage, de façon à faciliter le montage et réduire les coûts.

Les deux panneaux 31 et 32 défmissent un espace intermédiaire 33 dans lequel est logée la surface déployée du rideau d'occultation. Le rideau d'occultation pourra bien sûr selon ce mode de réalisation présenter toutes les variantes décrites ci-avant, notamment quant aux zones d'opacités et/ou de coloris différents, et quant aux moyens d'actionnement des tubes d'enroulement.

L'utilisation du dispositif pour l'occultation variable d'une vitre formée de deux panneaux permet notamment d'assurer que la surface déployée suive parfaitement la courbure de celle-ci et permet en outre d'éviter que le rideau d'occultation soit endommagé ou tâché lors de son utilisation.

L'invention concerne d'une façon générale les modules de toit et les véhicules automobiles équipés d'au moins un dispositif de ce type.

## Revendications

1. Dispositif d'occultation pour une surface vitrée d'un véhicule automobile comprenant un rideau d'occultation, présentant deux extrémités,
**caractérisé en ce que** lesdites extrémités sont solidarisées respectivement à un premier et un second tubes d'enroulement, placés de part et d'autre d'une surface à occulter, et **en ce que** la longueur dudit rideau d'occultation entre lesdites deux extrémités est supérieure à la longueur de ladite surface à occulter.

2. Dispositif d'occultation selon la revendication 1, **caractérisé en ce que** ledit rideau d'occultation présente sur sa longueur des zones d'opacité et/ou de coloris et/ou de motifs et/ou de texture prédéterminés différentes.

3. Dispositif d'occultation selon la revendication 2, **caractérisé en ce que** lesdites zones s'étendent sensiblement parallèlement auxdits tubes d'enroulement.

4. Dispositif d'occultation selon l'une quelconque des revendications 2 et 3,
**caractérisé en ce que** la longueur d'au moins une desdites zones est sensiblement égale à la longueur de ladite surface à occulter.

5. Dispositif d'occultation selon l'une quelconque des revendications 2 à 4,
**caractérisé en ce qu'**au moins une desdites zones est transparente ou présente un évidement encadré de chaque côté par une bordure latérale d'entraînement.

6. Dispositif d'occultation selon l'une quelconque des revendications 2 à 5,
**caractérisé en ce que** ledit rideau d'occultation comprend au moins une zone intermédiaire présentant un degré d'opacité variable et progressif.

7. Dispositif selon l'une quelconque des revendications 1 à 6, **caractérisé en ce qu'**au moins un desdits tubes d'enroulement est mobile en coulissement perpendiculairement à son axe d'enroulement.

8. Dispositif d'occultation selon l'une quelconque des revendication 1 à 7,
**caractérisé en ce qu'**il est destiné à l'occultation d'un pavillon vitré ou d'une partie d'un pavillon vitré.

9. Dispositif d'occultation selon l'une quelconque des revendications 1 à 8,
**caractérisé en ce que** ledit rideau d'occultation s'étend dans un espace intérieur défmi par deux panneaux vitrés superposés et formant un module de toit.

10. Dispositif d'occultation selon la revendication 9, **caractérisé en ce que** lesdits tubes d'enroulement sont montés sur ou dans ledit module de toit.

11. Dispositif d'occultation selon l'une quelconque des revendications 1 à 10,
**caractérisé en ce que** ladite surface vitrée à occulter est réalisée en verre ou en matière plastique.

12. Dispositif d'occultation selon l'une quelconque des revendications 1 à 11,
**caractérisé en ce que** ladite longueur dudit rideau d'occultation est d'au moins deux fois la longueur de ladite surface à occulter.

13. Dispositif d'occultation selon l'une quelconque des revendications 1 à12,
**caractérisé en ce que en ce qu'**au moins un desdits tubes d'enroulement est associé à des moyens de motorisation assurant la rotation d'au moins un du ou desdits tubes d'enroulement.

14. Dispositif d'occultation selon l'une quelconque des revendications 1 à13,
**caractérisé en ce que** ledit rideau d'occultation est réalisé en toile et/ou en matière plastique.

15. Module de toit comprenant deux panneaux superposés et solidarisés l'un à l'autre, définissant un espace intérieur au moins partiellement fermé, dans lequel s'entend au moins un dispositif d'occultation selon l'une quelconque des revendications 1 à 14.

16. Véhicule automobile **caractérisé en ce qu'**il comprend au moins un dispositif d'occultation selon l'une quelconque des revendications 1 à 14 et/ou un module selon la revendication 15.
